# EUROPEAN PATENT SPECIFICATION

(11) **EP 2 801 930 B1**
(45) Date of publication and mention of the grant of the patent: **27.07.2016**
(21) Application number: 13167169.5
(22) Date of filing: 09.05.2013
(51) Int. Cl.: H04W 74/08, G06K 7/10, H04W 74/06

(54) **A near field communication reader adapted for NFC A anti collision and a method of NFC A anti collision**
Für NFC-A-Kollisionsschutz angepasster Nahfeldkommunikationsleser und Verfahren zum NFC-A-Kollisionsschutz
Lecteur de communication en champ proche, conçu pour un NFC anti collision et procédé anticollision d'un NFC

(43) Date of publication of application: 12.11.2014
(73) Proprietor: ST-Ericsson SA, 1228 Plan-les-Ouates (CH)
(72) Inventor: Hussain, Jafer, 669597 Singapore (SG); Pierres, Arnaud, 547218 Singapore (SG)
(74) Representative: Kemp, Paul Geoffrey

(56) References cited:
- "NFC Activity Specification 1.0", , 18 November 2010 (2010-11-18), XP055059248, Retrieved from the Internet: URL:http://www.nfc-forum.org/specs/spec_li cense/document_form/custom_layout?13654233 37032 [retrieved on 2013-04-11]
- Jafer Hussain: "Correction to NFC-A Collision Resolution Activity", , 4 September 2012 (2012-09-04), XP055083274, Retrieved from the Internet: URL:www.nfc-forum.org [retrieved on 2013-10-09]
- John Hillan: "Correction to NFC-A Collision Resolution Activity", , 3 February 2012 (2012-02-03), XP055059795, Retrieved from the Internet: URL:http://www.nfc-forum.org/apps/group_pu blic/download.php/11097/Qualcomm%20Input%2 0Paper%20on%20NFC-A%20Collision%20Resoluti on.docx [retrieved on 2013-04-16]

## Description

### Technical Field

Near field communication (NFC) is a set of protocols for contactless communication between a reader and a tag. A reader is known in NFC Forum specifications as a PCD (proximity coupled device) but is also known as an initiator. A tag is known in NFC Forum specifications as a PICS (proximity integrated circuit card) but is also known as a listen device. Communication is via a radio frequency field operating at 13.56 MHz over a short range up to 20cm. More details are to be found in the specifications of the NFC Forum, and in the international standard ISO/IED 14443.

In NFC communication data will be stored on the NFC tag. The reader aims to interrogate the tag and receive the data.

An NFC reader may be a dedicated device implemented in: a credit or debit payment card reader, door lock or turnstile. An NFC tag may also be a dedicated device implemented most commonly in the form of a card or fob, examples include a credit or debit payment card, key card, travel pass or passport. However, the technical field also includes NFC technology enabled smart devices such as smart mobile phones, pads/tablets or personal digital assistants. Such NFC enabled smart devices will be provided with a processor, memory, antenna and other physical components required to communicate as a reader and/or a tag so that the smart device can act as any or several kinds of tag or be able to read any kind of tag.

NFC enabled readers and tags communicate using a number of different "technologies", specifically NFC-A, NFC-B and NFC-F. This specification relates to NFC-A technology devices as more specifically defined in ISO/IED14443A, in particular the relevant anti-collision protocols in Chapter 6 and in NFC Forum-TS-Activity-1.0, 2010-11-18.

### Prior Art

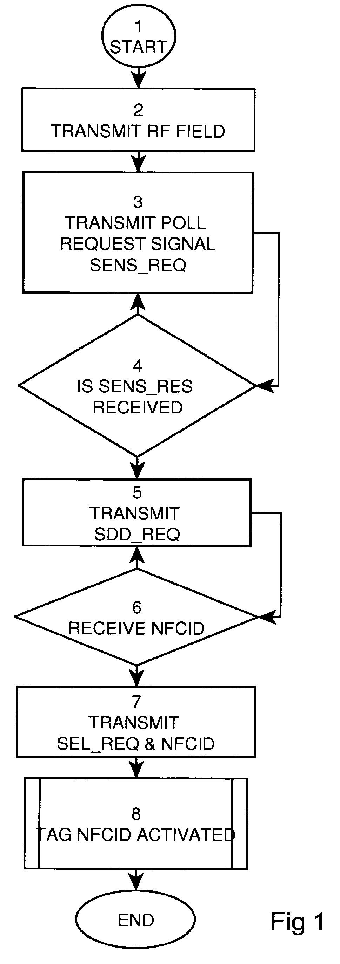

As shown in figure 1 all NFC technology communications are initiated by the reader starting at step 1. At step 2 the reader transmits an RF field which activates and may power any tags within range of the RF field irrespective of technology. At step 3 a poll request signal SENS_REQ is transmitted by the reader. Only NFC-A technology tags will respond to a SENS-REQ poll request signal and all NFC-A tags receiving the signal will respond simultaneously with a poll response signal SENS-RES. The reader detects the receipt of the SENS_RES signal at step 4.

In the simplest case there will be only one poll response signal from an NFGA device. Each NFC-A tag has a unique identification known as NFCID1. The SENS-RES signal will include the size of the NFCID1 enabling the reader to send a single device poll request command SDD_REQ, which will cause the tag to transmit NFCID1. On receipt of the NFCID1 the reader will send the activate tag command incorporating the received NFCID1 SEL_REQ command. On receipt of the SEL_REQ command the tag will enter the active state to communicate with the reader. The tag is thus resolved.

In practice, especially where the NFC tags are emulated by an NFC enabled smart device, it is common for several tags, especially several NFC-A type tags to be emulated by the smart device. Where several NFC-A tags are present in the field simultaneously there is a probability of collision at bit level between the simultaneously received SENS-RES signals.

The NFC forum provides for a collision resolution activity as described at "NFC Forum TS activity 1.0" 9.3.4 and Figure 7. The algorithm selects one device after the other. Every time a collision is detected, the algorithm continues with the valid bits of the NFCID1 cascade level followed by a 1b cascade bit. The 1 b cascade bit indicates that the NFCID1 is incomplete, 0b indicates it is complete. This way, multiple devices can be identified by selecting all cascade levels of one device before using the algorithm in a new cycle to resolve the next unresolved tag Before attempting to resolve the next unresolved tag, the resolved device is sent to SLEEP_A Sub-state to exclude it from the remaining collision resolution process.

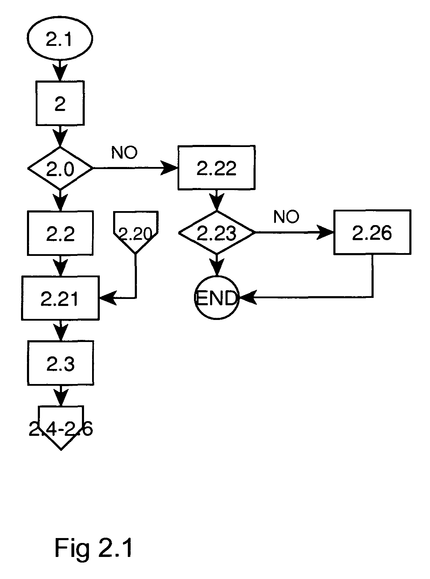

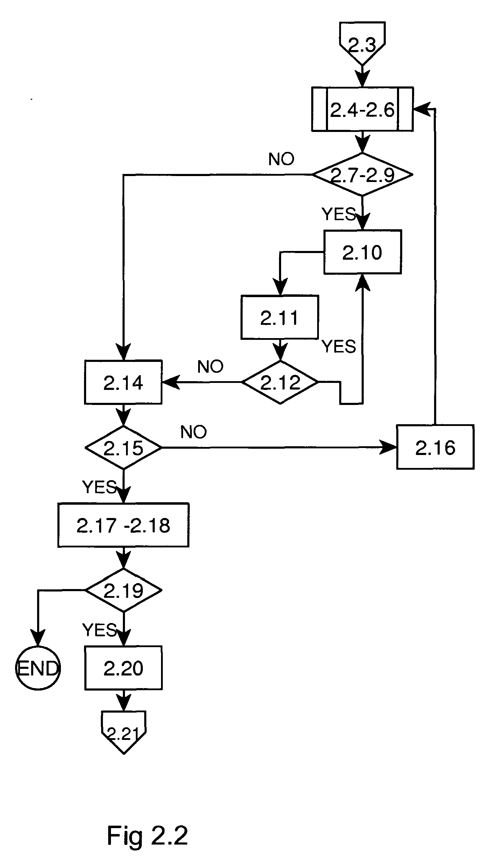

Figure 2 illustrates this prior art collision resolution method in more detail. The reader device starts the process and emits and RF field at step 2. At step 2.0 the response (SENS_RES) from tags within rang of the RF field is examined to ascertain if the respective tag supports the collision resolution process. NFC-A tags come in three variants, namely NFC-A type 1, NFC-A type 2 and NFC-A type 4A. Of these only type 1 tags support the collision resolution process. If any tag in field is other than type 1 the process goes to step 2.22 where the read identifier command is sent. If there is collision the method ends, and the resolution for all tags will fail; if not the identity of the tag (NFCID1) is stored and the tag can be resolved.

For type 1 tags the process goes to step 2.2 where the device counter and collision flags are set to 0 for no collision. A poll response request (SENS_REQ) is transmitted by the reader at step 2.21 and the reader selects a cascade level 1 for the requested tag response at step 2.3.

At steps 2.4 to 2.6 the command SDD_REQ is broadcast to be received by all tags having the cascade level one part of the NFCID1. If more than one tag has the cascade level 1 part of NFCID1 a bit level collision may occur in the response SENS_RES transmitted by the receiving tags and be detected at steps 2.7-2.9. At step 2.10 the number of valid bits received in the preceding response is set and SDD_REQ broadcast with SEL_CMD and SEL_PAR set in accordance with the new valid number of bits. If a collision is still detected in SENS_RES received at step 2.12 the method returns to step 2.10 and repeats steps 2.11 to 2.12. This may produce a new SENS_REQ poll response signal from progressively fewer tags resulting eventually in no collisions at step 2.12. When no collisions occur the method moves to step 2.14 where SEL_REQ is sent to activate the tag isolated and identified by the received complete NFCID1.

If the NFCID1 is incomplete the cascade level is increased from 1 at step 2.16 and the method advances to step 2.4-2.6, where the previously described method steps will cycle again until NFCID1 is complete at 2.15. When NFCID1 is complete at step 2.15 the method advances to steps 2.17-2.18 where the device counter is incremented and the completed NFCID1 stored. If more tags remain to be resolved at step 2.19 the method sends command SLP_REQ at step 2.20 to the last resolved tag; putting the last resolved tag into a sleep state unresponsive to the poll request and returns to step 2.21. The method continues to cycle until all tags are resolved. Because there is a risk of persistent collision interrupt counters can be set at various stages to prevent infinite loops, but have been omitted to simplify the flow chart of figure 2.

It will be appreciated that the known prior art method cannot resolve collisions where NFC-A type 2 or type 4A tags are present and will fail at step 2.0 although it may resolve one type 2 or type 4A tag.

The reader may be further enlightened as to the state of the art by reference to Jafer Hussain: "Correction to NFC-A Collision Resolution Activity", ,4 September 2012 (2012-09-04), XP055083274, which discloses the addition of a step to the collision resolution process of "NFC Technical Specification -TS-Activity-1.0 2010-11-18, 9.3.4" The step follows step 10, in which the number of valid bits is specified, and decides if the number of valid bits is 56, there being a maximum number of 57. If the number of valid bits is 56 the method goes to step 14, by passing examination of a single device detection response signal (SDD_RES) for bit level collisions.

The prior art method does not:
1) Provide any clarification about how all types of NFC-A listen devices can be resolved 'autonomously' by the NFC controller.
2) Complete when collision occurs on the last data bit of NFCID1 sent in the SDD_RES response of any Cascade Level.
3) Provide any guideline on which category of NFC-A listen devices should be resolved first.
4) Resolve more than one category of NFC-A listen device at one time.
5) Minimise the overall communication cycle and thus consumes much more power from the NFC Reader.
6) Predictably resolve Type 1 if Type 2 and/or Type 4A category of NFC-A listen device is present.
7) Avoid multiple polling cycles and multiple resolution processes.
8) Does not prevent interoperability and compliance issues.

### Statement of invention

Accordingly the present invention provides an NFC reader adapted to resolve multiple NFC-A tags according to claim1.

According to a second aspect of the present invention there is provided a method of resolving collisions in an NFC reader reading multiple NFC-A technology tags according to claim 7.

Other preferred and optional features of the present invention will be apparent from the following description and claims.

### Brief description of drawings

An NFC enabled device operable as a reader and a method of operating an NFC enabled device operable as a reader, will now be described, by way of example only, with reference to the accompanying figures, wherein:
Figure 3 is a flowchart diagramming the method;
Figure 4 is a diagrammatic representation of the reader; and
Figure 5A shows the reader implemented in the form of a smart, mobile phone reading tags in the form of cards and as emulated by another smart mobile phone.
Figure 5B shows the reader implemented in the form of a dedicated NFC device reading tags in the form of cards and as emulated by another smart mobile phone.

### Detailed description

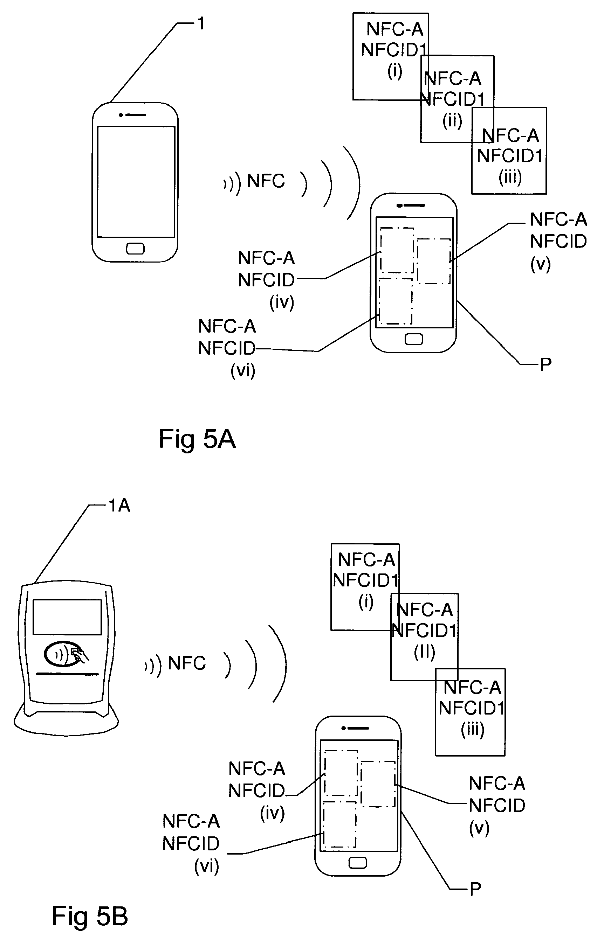

Figure 5A shows a reader 1 embodied in a smart device mobile phone. Figure 5B shows a dedicated NFC tag reader 1A perhaps embodied in a payment device or turnstile 5B. In each case, the reader 1 is emitting a radio frequency field F towards a set of three standalone NFC-A technology tags (i-iii) and a mobile phone P which is emulating three NFC-A technology tags (iv-vi). The tags are each entirely conventional and are each uniquely identifiable via an NFCID1. For convenience, the NFCID1's are each abbreviated to: i, ii, iii, iv, v and vi. In practice, each NFCID1 is comprised of up to three cascade levels of binary strings. The size of the NFCID1 may vary according to the particular type of NFC-A type.

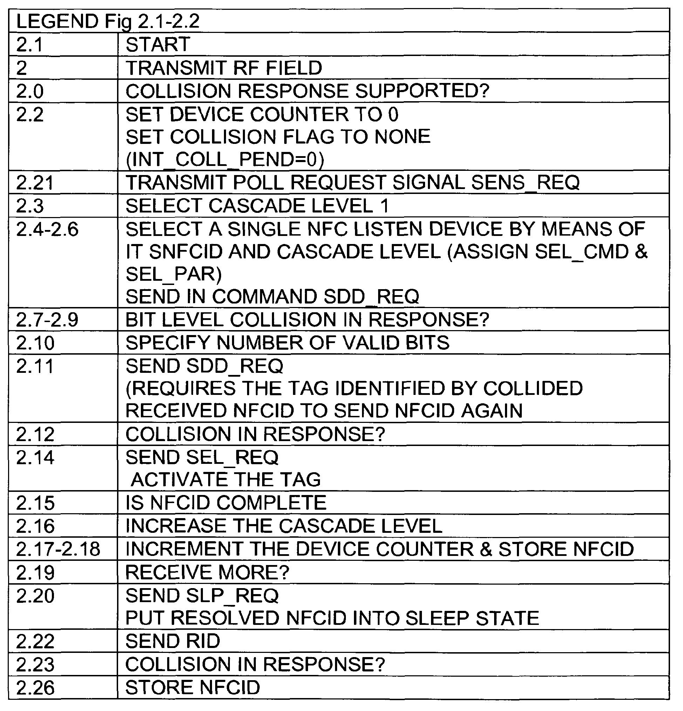

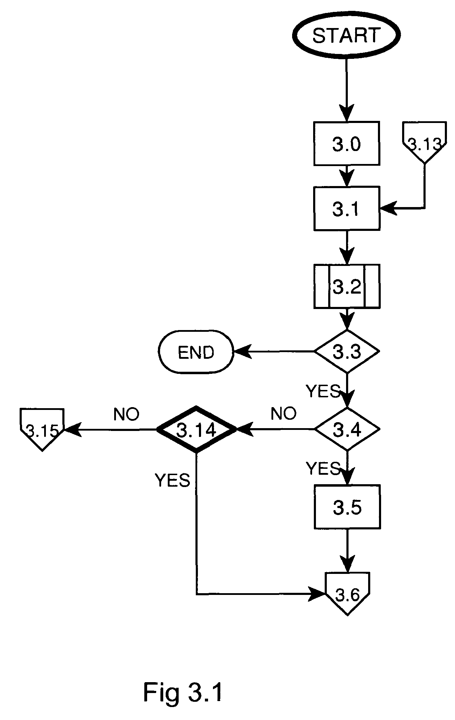

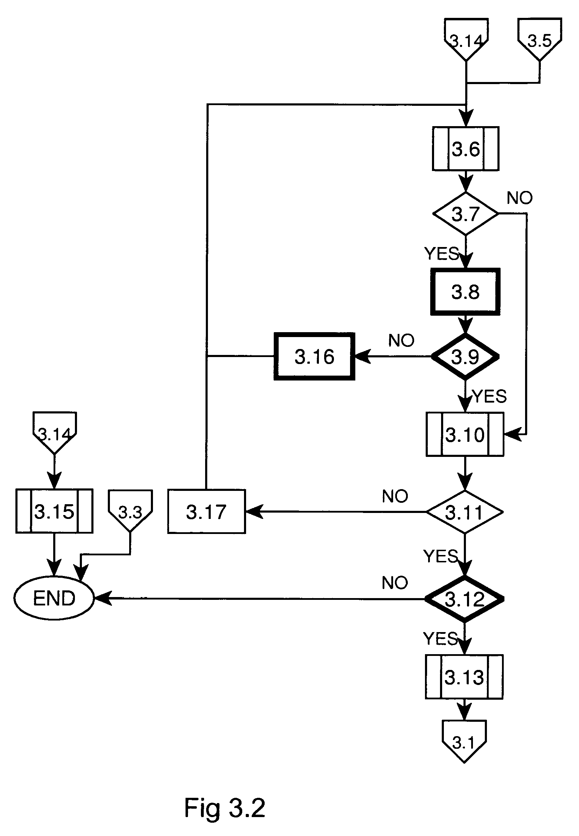

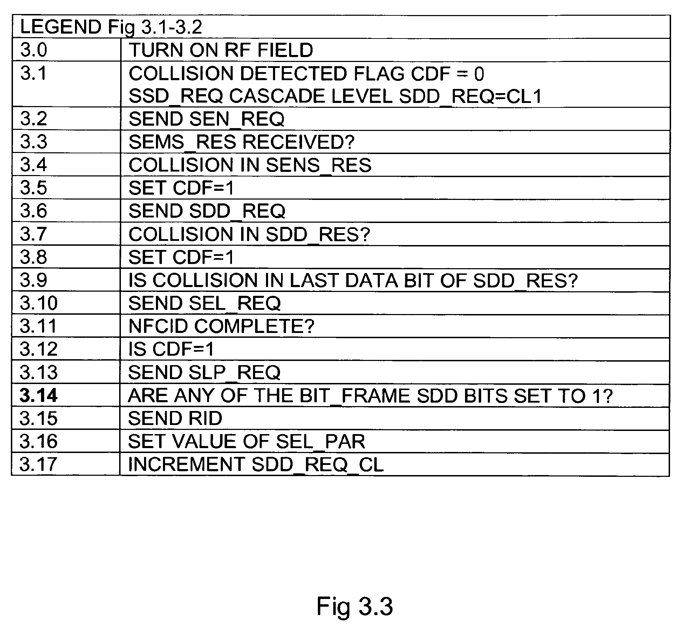

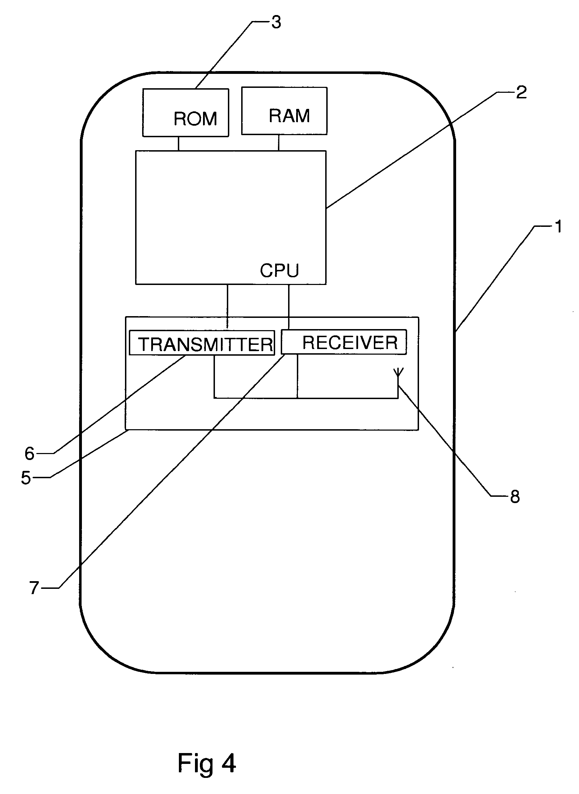

As shown in figure 4 the mobile phone 1 includes a CPU controller 2 controlling the operations of the mobile phone in response to machine readable code. The machine readable code is recorded in read only memory 3. When the code is run controller 2 implements the NFC-A anti-collision method shown in the flowchart of figure 3 via the NFC specific component sub-system 5 which includes an NFC transmitter 6, an NFC receiver 7 and an antenna 8. The phone is powered by a rechargeable cell not shown. The code to run the method will be preloaded by the manufacturer or may be installed subsequently via a range of communication methods including: the cell phone's USB connection, via Bluetooth® or WiFi, GPRS, LTE, WiFiMax or any other communication system. An essential feature of the method may be a data package incorporating the code. The package may be recorded on a server to be capable of copying and download over a WAN or LAN for installation in a smart device, or recorded on media such as CD for installation via any such communication system.

The user of the mobile phone 1 may wish to acquire data stored on one of the NFC-A technology tags emulated by the mobile phone P. An objective may be to establish secure communication between the mobile phone 1 and mobile phone 2 using peer to peer WiFi or Bluetooth®. Mobile phone P may also be in close proximity to a number of independent NFC-A tag cards (i)(ii)(iii) providing services such as contactless payment via near field communication. Each NFC-A device within range must be resolved. Communication is initiated by the user of phone reader 1 using the conventional cell phone controls to start the method. The controller 2 then broadcasts an RF field using transmitter 5 via antenna 8 at step 3.0 in figure 3. The controller sets a collision detection flag CDF to a value to indicate no collisions, in this case 0, in accordance with NFC Forum specifications. A single device detection command SDD_REQ, is set to cascade level 1.

As explained in the NFC specifications TS Activity 1.0 each NFC-A tag receiving the SDD_REQ command must respond by transmitting a part of its unique NFCID1 from the NFCID1 cascade level set. Consequently, the method calls for NFCID1 from cascade level (CL) 1 only in the first set of method cycles.

At step 3.2 the reader broadcasts the poll request command SENS_REQ. Each NFC-A tag receiving the command SENS_REQ simultaneously transmits a poll response SENS_RES as defined at NFC Forum Activity 1.0 4.6.3. SENS_RES is a transmission two bytes long. At step 3.3 the method confirms the receipt of any SENS_RES signals, if nothing is received the method ends. However if any SENS_RES signal has been received a collision detector operates to inspect the received SENS_RES signal at step 3.4 for any collisions. Collisions will occur where two or more different SENS_RES signals are received so that each of one and zero collide in the same frame. If a collision is detected at step 3.4, the method sets a collision detection flag at step 3.5, (e.g. INT_COLL_PEND) to 1 to indicate that a collision has been found. The method then goes to step 3.6.

At step 3.6 the controller causes the reader to transmit the single device detection command SDD_REQ signal. The SDD_REQ Command is used to obtain the NFCID1 at the set cascade level of an NFC tag and to detect whether more than one tag of the same technology is in the operating field. On receipt of an SDD_REQ signal each NFC-A tag responds by sending a single device detection response signal SDD_RES which may be received at step 3.6. In response to a SDD_REQ Command (with a SEL_PAR value equal to 20h) all NFC tags in the operating field transmit the requested cascade level of their NFCID1 (NFCID1 CLn, with n=1, 2 or 3). The NFCID1 of an NFC tag consists of 4, 7, or 10 bytes. The length of the response containing a complete NFCID1 cascade level (i.e., NFCID1 CL1, or NFCID1 CL2, or NFCID1 CL3) is always 5 bytes.

At step 3.7 the received SDD_RES signals are inspected for collision between bits received in each frame. If a collision is detected the collision detected flag (CDF) is set to 1 to indicate collision detection and the method moves to step 3.9. Here it may be noted that the method has detected the presence of multiple NFC-A tags where no collision was detected at step 3.4.

At step 3.9 the method determines if the collision is in the last data bit of the SDD_RES responses received. If there is a collision in the last data bit the method goes to step 3.10 where the reader sends the tag selection command SEL_REQ. Tags responsive to the NFCID1 sent with SEL_REQ command respond with the tag response SEL_RES signal at cascade level 1. The SEL_RES signal will include a cascade bit indicating that the NFCID1 received with SEL_REQ is either complete or incomplete.

The method then advances to step 3.11 where the SEL_RES received by the reader 1 is inspected to see if it is complete. If the NFID1 is complete the method advances to step 3.12 where the collision detection flag (CDF) is checked. If there is a collision (CDF=1) the reader sends a sleep command SLP_REQ to the tag corresponding to NFCID1 causing the tag to enter the sleep state. The method then cycles to step 3.1.

If no poll response (SENS_RES) is received at step 3.3 the method ends.

If no collision is sensed at step 3.4, in the poll response received at step 3.3, the method goes to step 3.14 which checks to discover if any of the single device detection (SDD) bits received with the SENS_RES signals are set to 1. If all the SDD bits are zero at step 3.14 the read identity (RID) command is sent at step 3.15 and the method ends. The RID Command is used to retrieve unique identifier and protocol support capabilities of an NFC tag. However if any SDD bits are set to 1 the method goes to step 3.6 to resolve the tags.

Collisions identified in the initial steps to 3.14 of the method are resolved in a collision resolution subroutine consisting of steps 3.6 to 3.13 and steps 3.17 and 3.16.

If at step 3.7 no collision is detected in SDD_RES the method goes to step 3.10 where the reader sends the SEL_REQ command.

If the NFCID1 is found to be incomplete at step 3.11 the SDD_REQ cascade level is incremented at step 3.17 and the method goes to step 3.6.

If the collision detection flag is zero at step 3.12 the method ends.

The tables below indicate the various possible outcomes of the method:

| **Bit-frame anti-collision process for single size NFCID1 of tag.** | | | |
|---|---|---|---|
| **TABLE 1** | | | |
| STEP | NFC Reader Device (command) | | NFC-A Listen Device (response) |
| 3.6 | SDD_REQ (CL1) | | → |
| | Value: 0x9320 | | |
| 3.7 | ← | | SDD_RES (CL1) |
| | | | 4-bytes of NFCID1 + 1-byte checksum |
| 3.10 | SEL_REQ (CL1) | | → |
| | Value: 0x9370 + 4-bytes of NFCID1 + 1-byte checksum | | |
| 3.11 | *NFC Reader Device has successfully resolved the Single-Size NFC-A listen device and now knows the type of the NFC-A listen device as well as the supported protocols.* | ← | SEL_RES (CL1) |
| | | | 1-byte response containing: Information about the |
| | | | supported protocols NFCID1 is complete |

| **Bit-frame anti-collision process for double size NFCID1 of tag.** | | | |
|---|---|---|---|
| **TABLE 2** | | | |
| STEP | NFC Reader Device (command) | | NFC-A Listen Device (response) |
| 3.6 | SDD_REQ (CL1) | | → |
| | Value: 0x9320 | | |
| 3.7 | ← | | SDD_RES (CL1) |
| | | | 1-byte cascade tag (0x88)+ first 3 bytes of NFCID1 + 1-byte checksum |
| 3.10 | SEL_REQ (CL1) | | |
| | Value: 0x9370 + 1-byte cascade tag (0x88)+ first 3 bytes of NFCID1 + 1-byte checksum | | → |
| 3.11 | | ← | SEL_RES (CL1) |
| | | | NFCID1 is NOT complete |
| 3.17 | Increment cascade level from 1 to 2 | | |
| | | | |
| 3.6 | SDD_REQ (CL2) | | → |
| | Value: 0x9520 | | |
| 3.7 | ← | | SDD_RES (CL2) |
| | | | last 4 bytes of NFCID1 + 1 byte checksum |
| 3.10 | SEL_REQ (CL2) | | → |
| | last 4 bytes of NFCID1 + 1 byte checksum | | |
| 3.11 | *NFC reader has successfully resolved the double size tag and now knows the type of tag* as *well as the supported protocols* | ← | SEL_RES (CL2) |
| | | | 1_byte response containing: Information about the |
| | | | supported protocols NFCID1 is complete |

| **Bit-frame anti-collision process for triple size NFCID1 of tag.** | | | |
|---|---|---|---|
| **TABLE 3** | | | |
| STEP | NFC Reader Device (command) | | NFC-A Listen Device (response) |
| 3.6 | SDD_REQ (CL1) | | → |
| | Value: 0x9320 | | |
| 3.7 | ← | | SDD_RES (CL1) |
| | | | 1-byte cascade tag (0x88)+ first 3 bytes of NFCID1 + 1-byte checksum |
| 3.10 | SEL_REQ (CL1) | | |
| | Value: 0x9370 + 1-byte cascade tag (0x88)+ first 3 bytes of NFCID1 + 1-byte checksum | | → |
| 3.11 | | ← | SEL_RES (CL1) |
| | | | NFCID1 is NOT complete |
| 3.17 | Increment cascade level from 1 to 2 | | |
| | | | |
| 3.6 | SDD_REQ (CL2) | | → |
| | Value: 0x9520 | | |
| 3.7 | ← | | SDD_RES (CL2) |
| | | | 1-byte cascade tag (0X88)+ Next 3 bytes of NFCID + 1-byte checksum |
| 3.10 | SEL_REQ (CL2) | | → |
| | Value 0x9570 + 1-byte cascade tag (0X88)+ Next 3 bytes of NFCID + 1-byte checksum | | |
| 3.11 | | ← | SEL_RES (CL2) |
| | | | NFCID1 is NOT complete |
| 3.17 | Increment cascade level from 2 to 3 | | |
| | | | |
| 3.6 | SDD_REQ (CL3) | → | |
| | value 0x9770 | | |
| 3.7 | | ← | SDD_RES(CL3) |
| | | | last 4 bytes of NFCID1 + 1 byte checksum |
| 3.10 | SEL_REQ(CL3) | → | |
| | Value 0x9770+ last 4 bytes of NFCID1 + 1 byte checksum | | |
| 3.11 | *NFC reader has successfully resolved the triple size tag and now knows the type of tag as well as the supported protocols* | ← | SEL_RES (CL3) |
| | | | 1 byte response containing: Information about the |
| | | | supported protocols, and NFCID1 is complete |

## Claims

1. An NFC reader adapted to resolve multiple NFC-A tags, said reader comprising:
a controller (2) arranged to run machine readable code recorded in a memory(3) in order to operate an NFC transmitter (6) and an NFC receiver (7); wherein:
the controller (2) is responsive to a start command to operate the transmitter (6) to;
broadcast (3.0,3.2) an RF field and an NFC-A technology specific poll request signal (SENS_REQ), and
to operate the receiver (7) to receive (3.3) a poll response signal (SENS_RES) from any NFC-A technology tag, the pole response signal (SENS_RES) including bit frame single device detection bits;
said controller being configured to examine (3,14) the bit frame single device detection bits of the received poll response signal (SENS_RES) for the presence or absence of bits set to the value "1" and responsive to the absence of any bits set to the value "1" to send a read identifier (RID) command;
**characterized in that**
the controller (2) is arranged to respond to receipt of any poll response signals (SENS_RES) to inspect (3.4) the received poll response signal (SENS_RES) for
the presence of a bit level collision in the received poll response signal (SENS_RES) before examination of the bit frame single device detection bits of the poll response signal for the presence of bits set to the value "1";
said controller is responsive to detection of a said bit level collision in the received poll response signal to implement a collision resolution sub-routine (3.6-3.13, 3.16,3.17) without examining the bit frame single device detection bits of the poll response signal (SENS_RES) for the presence of bits set to the value "1"; the controller (2) is responsive to the absence of a said bit level collision in the b received poll response signal (SENS_RES) to carry out said examination of the bit frame single device detection bits of the received poll response signal to determine if any bits received are set to the value "1", and
said controller (2) is responsive to detection of a bit set to the value "1" to run the collision resolution sub-routine.

2. An NFC reader according to claim 1 wherein:
the controller (2) is arranged to implement the collision resolution sub-routine by:
arranging the transmitter (6) to transmit (3.6) a single device detection request (SDD_REQ) set to a first cascade level (CL1);
and arranging the receiver (7) to receive (3.7) a single device detection response signal (SDD_RES);
the controller (2) is arranged to respond to receipt of the single device detection response signal (SDD_RES) to determine (3.9) if a bit level collision occurs in the last data bit of the single device detection response signal (SDD_RES).

3. An NFC reader according to claim 2 wherein:
the controller (2) is arranged to respond to the absence of a bit level collision in the last data bit of the single device detection response signal (SDD_RES), to set (3.16) a new value to the length of the single device detection request (SDD-REQ) and,
to operate the transmitter (6) to transmit the single device detection request with the new length.

4. An NFC reader according to claim 3 wherein,
the controller (2) is responsive to the absence of a said bit level collision in the single device detection response signal (SDD_RES) to send (3.10) a tag selection command (SEL-REQ) to select a specified tag using a near field communication identification code (NFCID1), said near field communication identification code being determined by the controller (2) from the single device detection response signal (SDD_RES), and
to operate the receiver (7) to receive a tag response (SEL-RES) including an indication that the near field communication identification code received by the tag is complete or incomplete.

5. An NFC reader according to claim 4 wherein the controller (2) is arranged to respond to detection of a complete near field communication identification code (NFCID1) in a cycle where collision has not been detected, to operate the transmitter (6) to transmit (3.13) a tag sleep command (SLP_REQ) to put the tag corresponding to the near field communication identification code (NFCID1) into a sleep mode.

6. An NFC reader according to claim 4 or claim 5 wherein the controller (2) is arranged to respond to a tag response signal (SEL_RES) indicating an incomplete near field communication identification code, to increment the cascade level for the single device detection request (SDD_REQ).

7. A method of resolving collisions in NFC reader reading multiple NFC-A technology tags comprising the steps of:
generating (3.0) a radio frequency field;
broadcasting (3.2) an NFC-A specific poll request signal (SENS_REQ);
receiving (3.3) a poll response signal (SENS_RES) from any NFC-A technology tag, the poll response signal (SENS_RES) including bit frame single device detection bits;
examining (3.14) the bit frame single device detection bits of the poll response signal (SENS_RES) for the presence of bits set to the value of "1";
in the absence of any bits set to the value of "1" transmitting (3.15) a read identifier command (RID)
**characterised by** the steps of;
inspecting (3.4) the received poll response signal (SENS_RES) for the presence of a bit level collision before the step of examining (3.14) the bit frame single device detection bits of the poll response signal received (SENS_RES) for the presence of bits set to the value of "1";
running the collision resolution sub-routine(3.6-3.13, 3.16, 3.17) where a bit level collision is detected in the poll response signal (SENS_RES) without carrying out said examining step, and in the absence of a said bit level collision in the received poll response signal (SENS-RES), carrying out said examining step and in the presence of any bit frame single device detection bits of the poll response signal (SENS_RES) set to the value of "1", running said collision resolution sub-routine.

8. A method according to claim 7 wherein the collision resolution sub-routine comprises the steps of:
sending (3.6) a single device detection request signal (SDD_REQ) set to a first cascade level;
receiving (3.7) a single device detection response signal (SDD_RES);
determining if a if bit level collision occurs in the last data bit of the single device detection response signal (SDD_RES).

9. A method according to claim 8 wherein;
when a bit level collision is absent in the last data bit of the single device detection response signal (SDD_RES) setting (3.16) a new value to the length of the single device detection request signal (SDD_REQ) and transmitting the new single device request signal.

10. A method according to claim 9 wherein;
in the absence of a bit level collision in the single device detection response signal (SDD_RES), transmitting (3.10) a tag selection command (SEL_REQ) to select a specified tag using a near field communication identification code (NFCID1), and
receiving a tag response (SEL_RES) including an indication that the near field communication identification code is complete or incomplete.

11. A method according to claim 10 wherein;
when collision has not been detected, and the near field communication identification code (NFCID1) is complete, a sleep command (SLP_REQ) is transmitted to the identified near field communication tag.

12. A method according to claim 10 or 11 wherein:
when the near field communication identification code (NFCID1) is incomplete, the cascade level of the single device detection code is incremented (3.17) and the incremented single device detection request signal (SDD_REQ) is sent (3.6).

## Patentansprüche

1. NFC-Lesevorrichtung, dafür ausgelegt, mehrere NFC-A-Etiketten aufzulösen, wobei die Lesevorrichtung umfasst:
einen Controller (2), der ausgelegt ist, einen maschinenlesbaren Code, der in einem Speicher (3) aufgezeichnet ist, auszuführen, um einen NFC-Sender (6) und
einen NFC-Empfänger (7) zu betreiben; wobei:
der Controller (2) auf einen Startbefehl ansprechend ist, um den Sender (6) zu betreiben, um:
ein HF-Feld und ein NFC-A-technologiespezifisches Anrufanforderungssignal (SENS_REQ) auszusenden (3.0, 3.2), und
den Empfänger (7) zu betreiben, um ein Anrufantwortsignal (SENS_RES) von irgendeinem Etikett einer NFC-A-Technologie zu empfangen (3.3), wobei das Anrufantwortsignal (SENS_RES) Bitrahmen-Einzeleinrichtung-Erfassungsbits beinhaltet;
wobei der Controller so konfiguriert ist, dass er die Bitrahmen-Einzeleinrichtung-Erfassungsbits des empfangenen Anrufantwortsignals (SENS_RES) hinsichtlich des Vorhandenseins oder Fehlens von Bits, die auf den Wert "1" gesetzt sind, überprüft (3,14), und im Ansprechen auf das Vorhandensein jedweder Bits, die auf den Wert "1" gesetzt sind, einen Leseidentifizierungs-(RID)-Befehl sendet;
**dadurch gekennzeichnet, dass**
der Controller (2) so ausgelegt ist, dass er auf den Empfang jedweder Anrufantwortsignale (SENS_RES) anspricht, um das empfangene Anrufantwortsignal (SENS_RES) hinsichtlich des Vorhandenseins einer Bitpegel-Kollision in dem empfangenen Anrufantwortsignal (SENS_RES) vor einer Überprüfung der Bitrahmen-Einzeleinrichtung-Erfassungsbits des Anrufantwortsignals hinsichtlich des Vorhandenseins von Bits, die auf den Wert "1" gesetzt sind, zu prüfen (3.4);
der Controller ansprechend auf die Erfassung der Bitpegel-Kollision in dem empfangenen Anrufantwortsignal ist, um eine Kollisionsauflösungs-Unterroutine (3.6 - 3.13, 3.16, 3.17) ohne ein Überprüfen der Bitrahmen-Einzeleinrichtung-Erfassungsbits des Anrufantwortsignals (SENS_RES) hinsichtlich des Vorhandenseins von Bits, die auf den Wert "1" gesetzt sind, zu implementieren;
der Controller (2) ansprechend auf das Fehlen einer Bitpegel-Kollision in dem empfangenen Anrufantwortsignal (SENS_RES) ist, um die Überprüfung der Bitrahmen-Einzeleinrichtung-Erfassungsbits des empfangenen Anrufantwortsignals auszuführen, um zu bestimmen, ob irgendwelche empfangenen Bits auf den Wert "1" gesetzt sind, und
der Controller (2) ansprechend auf eine Erfassung eines Bits ist, das auf den Wert "1" gesetzt ist, um die Kollisionsauflösungs-Unterroutine auszuführen.

2. NFC-Lesevorrichtung nach Anspruch 1, wobei:
der Controller (2) ausgelegt ist, die Kollisionsauflösungs-Unterroutine zu implementieren durch:
Auslegen des Senders (6), eine Einzeleinrichtung-Erfassungsanfrage (SDD_REQ), die auf eine erste Kaskadenstufe (CL1) gesetzt ist, zu senden (3.6);
und Auslegen des Empfängers (7), ein Einzeleinrichtung-Erfassungs-Antwortsignal (SDD_RES) zu empfangen (3.7);
der Controller (2) ausgelegt ist, auf einen Empfang des Einzeleinrichtung-Erfassungs-Antwortsignals (SDD_RES) zu antworten, um zu bestimmen (3.9), ob eine Bitpegel-Kollision in dem letzten Datenbit des Einzeleinrichtung-Erfassungs-Antwortsignals (SDD_RES) auftritt.

3. NFC-Lesevorrichtung nach Anspruch 2, wobei:
der Controller (2) ausgelegt ist, auf das Fehlen einer Bitpegel-Kollision in dem letzten Datenbit des Einzeleinrichtung-Erfassungs-Antwortsignals (SDD_RES) zu reagieren, um einen neuen Wert auf die Länge der Einzeleinrichtung-Erfassungsanfrage (SDD_REQ) zu setzen (3.16), und
den Sender (6) zu betreiben, um die Einzeleinrichtung-Erfassungsanfrage mit der neuen Länge zusenden.

4. NFC-Lesevorrichtung nach Anspruch 3, wobei
der Controller (2) ansprechend auf das Fehlen einer Bitpegel-Kollision in dem Einzeleinrichtung-Erfassungs-Antwortsignal (SDD_RES) ist, um einen Etikett-Auswahlbefehl (SEL-REQ) zu senden (3.10), um ein spezifiziertes Etikett unter Verwendung eines Nahfeldkommunikation-Identifikationscodes (NFCID1) auszuwählen, wobei der Nahfeldkommunikation-Identifikationscode von dem Controller (2) aus dem Einzeleinrichtung-Erfassungs-Antwortsignal (SDD_RES) bestimmt wird, und
um den Empfänger (7) zu betreiben, um eine Etikettantwort (SEL-RES) zu empfangen, welche einen Hinweis darauf beinhaltet, dass der Nahfeldkommunikation-Identifikationscode, der von dem Etikett empfangen wird, vollständig oder unvollständig ist.

5. NFC-Lesevorrichtung nach Anspruch 4, wobei der Controller (2) ausgelegt ist, auf eine Erfassung eines vollständigen Nahfeldkommunikation-Identifikationscodes (NFCID1) in einem Zyklus zu antworten, wo eine Kollision nicht erfasst worden ist, um den Sender (6) zu betreiben, einen Etikett-Schlafbefehl (SLP_REQ) zu senden (3.13), um das Etikett, welches dem Nahfeldkommunikation-Identifikationscode (NFCID1) entspricht, in einen Schlafmodus zu versetzen.

6. NFC-Lesevorrichtung nach Anspruch 4 oder Anspruch 5, wobei der Controller (2) ausgelegt ist, auf ein Etikett-Antwortsignal (SEL_RES) zu antworten, welches einen unvollständigen Nahfeldkommunikation-Identifikationscode anzeigt, um die Kaskadenstufe für die Einzeleinrichtung-Erfassungsanfrage (SDD_REQ) hochzusetzen.

7. Verfahren zum Auflösen von Kollisionen in einer NFC-Lesevorrichtung, welche mehrere Etiketten einer NFC-A-Technologie liest, umfassend die Schritte:
Erzeugen (3.0) eines Hochfrequenzfelds;
Aussenden (3.2) eines NFC-A-spezifischen Anrufanforderungssignals (SENS_REQ);
Empfangen (3.3) eines Anrufantwortsignals (SENS_RES) von irgendeinem Etikett einer NFC-A-Technologie, wobei das Anrufantwortsignal (SENS_RES) Bitrahmen-Einzeleinrichtung-Erfassungsbits beinhaltet;
Überprüfen (3.14) der Bitrahmen-Einzeleinrichtung-Erfassungsbits des Anrufantwortsignals (SENS_RES) hinsichtlich des Vorhandenseins von Bits, die auf den Wert "1" gesetzt sind;
beim Fehlen jedweder Bits, die auf den Wert "1" gesetzt sind, Senden (3. 15) eines Leseidentifizierungs-Befehls (RID),
**gekennzeichnet durch** die Schritte:
Prüfen (3.4) des empfangenen Anrufantwortsignals (SENS_RES) hinsichtlich des Vorhandenseins einer Bitpegel-Kollision vor dem Schritt eines Überprüfens (3.14) der Bitrahmen-Einzeleinrichtung-Erfassungsbits des empfangenen Anrufantwortsignals (SENS_RES) hinsichtlich des Vorhandenseins von Bits, die auf den Wert "1" gesetzt sind;
Ausführen der Kollisionsauflösungs-Unterroutine (3.6 - 3.13, 3.16, 3.17), wobei eine Bitpegel-Kollision in dem Anrufantwortsignal (SENS_RES) erfasst wird, ohne den Überprüfungsschritt auszuführen, und bei dem Fehlen einer Bitpegel-Kollision in dem empfangenen Anrufantwortsignal (SENS_RES), Ausführen des Überprüfungsschritts, und bei dem Vorhandensein jedweder Bitrahmen-Einzeleinrichtung-Erfassungsbits des Anrufantwortsignals (SENS_RES), die auf den Wert "1" gesetzt sind, Ausführen der Kollisionsauflösungs-Unterroutine.

8. Verfahren nach Anspruch 7, wobei die Kollisionsauflösungs-Unterroutine die Schritte umfasst:
Senden (3.6) eines Einzeleinrichtung-Erfassungsanfragesignals (SDD_REQ), das auf einen ersten Kaskadenpegel gesetzt ist;
Empfangen (3.7) eines Einzeleinrichtung-Erfassungs-Antwortsignals (SDD_RES);
Bestimmen, ob eine Bitpegel-Kollision in dem letzten Datenbit des Einzeleinrichtung-Erfassungs-Antwortsignals (SDD_RES) auftritt.

9. Verfahren nach Anspruch 8, wobei:
wenn eine Bitpegel-Kollision in dem letzten Datenbit des Einzeleinrichtung-Erfassungs-Antwortsignals (SDD_RES) nicht vorhanden ist, Setzen (3.16) eines neuen Werts auf die Länge des Einzeleinrichtung-Erfassungsanfragesignals (SDD_REQ) und Senden des neuen Einzeleinrichtung-Anfragesignals.

10. Verfahren nach Anspruch 9, wobei:
bei dem Fehlen einer Bitpegel-Kollision in dem Einzeleinrichtung-Erfassungs-Antwortsignal (SDD_RES), Senden (3.10) eines Etikett-Auswahlbefehls (SEL-REQ), um ein spezifiziertes Etikett unter Verwendung eines Nahfeldkommunikation-Identifikationscodes (NFCID1) auszuwählen, und Empfangen einer Etikettantwort (SEL-RES), welche einen Hinweis darauf beinhaltet, dass der Nahfeldkommunikation-Identifikationscode, der von dem Etikett empfangen wird, vollständig oder unvollständig ist.

11. Verfahren nach Anspruch 10, wobei:
wenn eine Kollision nicht erfasst worden ist und der Nahfeldkommunikation-Identifikationscode (NFCID1) vollständig ist, ein Schlafbefehl (SLP_REQ) zu dem identifizierten Nahfeldkommunikation-Etikett gesendet wird.

12. Verfahren nach Anspruch 10 oder 11, wobei:
wenn der Nahfeldkommunikation-Identifikationscode (NFCID1) unvollständig ist, der Kaskadenpegel des Einzeleinrichtung-Erfassungscodes hochgesetzt wird (3.17) und das hochgesetzte Einzeleinrichtung-Erfassungsanfragesignal (SDD_REQ) gesendet wird (3.6).

## Revendications

1. Lecteur NFC adapté pour résoudre de multiples étiquettes NFC-A, ledit lecteur comprenant :
un dispositif de commande (2) agencé pour exécuter un code lisible par machine enregistré dans une mémoire (3) afin d'utiliser un émetteur NFC (6) et un récepteur NFC (7) ; dans lequel :
le dispositif de commande (2) répond à une commande de démarrage visant à utiliser l'émetteur (6) pour :
diffuser (3.0, 3.2) un champ RF et un signal de demande d'interrogation (SENS_REQ) spécifique à une technologie NFC-A, et
utiliser le récepteur (7) pour recevoir (3.3) un signal de réponse d'interrogation (SENS_RES) provenant d'une étiquette de technologie NFC-A, le signal de réponse d'interrogation (SENS_RES) comprenant des bits de détection d'un dispositif unique de trame de bits ;
ledit dispositif de commande étant configuré pour examiner (3, 14) les bits de détection du dispositif unique de trame de bits du signal de réponse d'interrogation reçu (SENS_RES) concernant la présence ou l'absence de bits définis sur la valeur « 1 » et en réponse à l'absence de bits définis sur la valeur « 1 », pour envoyer une commande d'identifiant lu (RID) ;
**caractérisé en ce que**
le dispositif de commande (2) est agencé pour répondre à la réception de signaux de réponse d'interrogation (SENS_RES) pour inspecter (3.4) le signal de réponse d'interrogation reçu (SENS_RES) concernant la présence d'une collision de niveau binaire dans le signal de réponse d'interrogation reçu (SENS_RES) avant examen des bits de détection du dispositif unique de trame de bits du signal de réponse d'interrogation concernant la présence de bits définis sur la valeur « 1 » ;
ledit dispositif de commande répond à une détection d'une dite collision de niveau binaire dans le signal de réponse d'interrogation reçu pour mettre en oeuvre un sous-programme de résolution de collision (3.6-3.13, 3.16, 3.17) sans examen des bits de détection du dispositif unique de trame de bits du signal de réponse d'interrogation (SENS_RES) concernant la présence de bits définis sur la valeur « 1 » ;
le dispositif de commande (2) répond à l'absence d'une dite collision de niveau binaire dans le signal de réponse d'interrogation reçu (SENS_RES) pour effectuer ledit examen des bits de détection du dispositif unique de trame de bits du signal de réponse d'interrogation reçu en vue de déterminer si des bits reçus sont définis sur la valeur « 1 », et
ledit dispositif de commande (2) répond à la détection d'un bit défini sur la valeur « 1 » pour exécuter le sous-programme de résolution de collision.

2. Lecteur NFC selon la revendication 1 dans lequel :
le dispositif de commande (2) est agencé pour mettre en oeuvre le sous-programme de résolution de collision par :
agencement de l'émetteur (6) pour transmettre (3.6) une demande de détection de dispositif unique (SDD_REQ) définie sur un premier niveau de cascade (CL1) ;
et agencement du récepteur (7) pour recevoir (3.7) un signal de réponse de détection d'un dispositif unique (SDD_RES) ;
le dispositif de commande (2) est agencé de manière à répondre à la réception du signal de réponse de détection du dispositif unique (SDD_RES) pour déterminer (3.9) si une collision de niveau binaire se produit dans le dernier bit de données du signal de réponse de détection du dispositif unique (SDD_RES).

3. Lecteur NFC selon la revendication 2 dans lequel :
le dispositif de commande (2) est agencé pour répondre à l'absence d'une collision de niveau binaire dans le dernier bit de données du signal de réponse de détection du dispositif unique (SDD_RES), pour définir (3.16) une nouvelle valeur sur la longueur de la demande de détection de dispositif unique (SDD_REQ) et,
utiliser l'émetteur (6) pour transmettre la demande de détection de dispositif unique avec la nouvelle longueur.

4. Lecteur NFC selon la revendication 3 dans lequel,
le dispositif de commande (2) répond à l'absence d'une dite collision de niveau binaire dans le signal de réponse de détection du dispositif unique (SDD_RES) pour envoyer (3.10) une commande de sélection d'étiquette (SEL-REQ) pour sélectionner une étiquette spécifiée à l'aide d'un code d'identification de communication en champ proche (NFCID1), ledit code d'identification de communication en champ proche étant déterminé par le dispositif de commande (2) à partir du signal de réponse de détection du dispositif unique (SDD_RES), et
utiliser le récepteur (7) pour recevoir une réponse d'étiquette (SEL-RES) comprenant une indication que le code d'identification de communication en champ proche reçu par l'étiquette est complet ou incomplet.

5. Lecteur NFC selon la revendication 4 dans lequel le dispositif de commande (2) est agencé pour répondre à la détection d'un code d'identification de communication en champ proche (NFCID1) dans un cycle où une collision n'a pas été détectée, pour utiliser l'émetteur (6) en vue de transmettre (3.13) une commande de mise en veille d'étiquette (SLP_REQ) pour placer l'étiquette correspondant au code d'identification de communication en champ proche (NFCID1) dans un mode de veille.

6. Lecteur NFC selon la revendication 4 ou la revendication 5 dans lequel le dispositif de commande (2) est agencé pour répondre à un signal de réponse d'étiquette (SEL_RES) indiquant un code d'identification de communication en champ proche incomplet, en vue d'augmenter le niveau de cascade pour la demande de détection de dispositif unique (SDD_REQ).

7. Procédé de résolution de collisions dans un lecteur NFC lisant de multiples étiquettes de technologie NFC-A comprenant les étapes consistant à :
générer (3.0) un champ de fréquence radio ;
diffuser (3.2) un signal de demande d'interrogation spécifique NFC-A (SENS_REQ) ;
recevoir (3.3) un signal de réponse d'interrogation (SENS_RES) provenant d'une étiquette de technologie NFC-A, le signal de réponse d'interrogation (SENS_RES) comprenant des bits de détection du dispositif unique de trame de bits ;
examiner (3.14) les bits de détection du dispositif unique de trame de bits du signal de réponse d'interrogation (SENS_RES) concernant la présence de bits définis sur la valeur de « 1 » ;
en l'absence de bits définis sur la valeur de « 1 », transmettre (3.15) une commande d'identifiant lu (RID)
**caractérisé par** les étapes consistant à
inspecter (3.4) le signal de réponse d'interrogation reçu (SENS_RES) concernant la présence d'une collision de niveau binaire avant l'étape d'examen (3.14) des bits de détection du dispositif unique de trame de bits du signal de réponse d'interrogation reçu (SENS_RES) concernant la présence de bits définis sur la valeur de « 1 » ;
exécuter le sous-programme de résolution de collision (3.6-3.13, 3.16, 3.17) où une collision de niveau binaire est détectée dans le signal de réponse d'interrogation (SENS_RES) sans mettre en oeuvre ladite étape d'examen, et en l'absence d'une dite collision de niveau binaire dans le signal de réponse d'interrogation reçu (SENS_RES), mettre en oeuvre ladite étape d'examen, et en présence des bits de détection du dispositif unique de trame de bits du signal de réponse d'interrogation (SENS_RES) défini sur la valeur de « 1 », exécuter ledit sous-programme de résolution de collision.

8. Procédé selon la revendication 7 dans lequel le sous-programme de résolution de collision comprend les étapes consistant à :
envoyer (3.6) un signal de demande de détection de dispositif unique (SDD_REQ) défini sur un premier niveau de cascade ;
recevoir (3.7) un signal de réponse de détection d'un dispositif unique (SDD_RES) ;
déterminer si une collision de niveau binaire se produit dans le dernier bit de données du signal de réponse de détection du dispositif unique (SDD_RES).

9. Procédé selon la revendication 8 dans lequel :
lorsqu'une collision de niveau binaire est absente dans le dernier bit de données du signal de réponse de détection du dispositif unique (SDD_RES), définir (3.16) une nouvelle valeur sur la longueur du signal de demande de détection de dispositif unique (SDD_REQ) et transmettre le nouveau signal de demande du dispositif unique.

10. Procédé selon la revendication 9 dans lequel :
en l'absence d'une collision de niveau binaire dans le signal de réponse de détection du dispositif unique (SDD_RES), transmettre (3.10) une commande de sélection d'étiquette (SEL_REQ) pour sélectionner une étiquette spécifiée à l'aide d'un code d'identification de communication en champ proche (NFCID1), et
recevoir une réponse d'étiquette (SEL_RES) comprenant une indication que le code d'identification de communication en champ proche est complet ou incomplet.

11. Procédé selon la revendication 10 dans lequel :
lorsqu'une collision n'a pas été détectée, et que le code d'identification de communication en champ proche (NFCID1) est complet, une commande de mise en veille (SLP_REQ) est transmise à l'étiquette de communication en champ proche identifiée.

12. Procédé selon la revendication 10 ou 11 dans lequel :
lorsque le code d'identification de communication en champ proche (NFCID1) est incomplet, le niveau de cascade du code de détection du dispositif unique est incrémenté (3.17) et le signal de demande de détection de dispositif unique incrémenté (SDD-REQ) est envoyé (3.6).
